# EUROPÄISCHE PATENTSCHRIFT

(11) **EP 1 386 718 B1**
(45) Veröffentlichungstag und Bekanntmachung des Hinweises auf die Patenterteilung: **14.12.2005**
(21) Anmeldenummer: 02017440.5
(22) Anmeldetag: 03.08.2002
(51) Int. Cl.: B29C 47/88, B29C 47/90

(54) **Vorrichtung zum Glätten und Kühlen einer aus einer Schlitzdüse austretenden Kunststoffbahn**
Device for flattening and cooling of a plastic web from a slot-die
Dispositif d'aplanissage et de refroidissement d'une bande plastique sortant d'une filière plate

(43) Veröffentlichungstag der Anmeldung: 04.02.2004
(73) Patentinhaber: Reifenhäuser GmbH & Co. KG Maschinenfabrik, 53839 Troisdorf (DE)
(72) Erfinder: Meyer, Helmut, 53842 Troisdorf (DE)
(74) Vertreter: Rohmann, Michael

(56) Entgegenhaltungen:
- EP-A- 1 149 684
- CH-A- 414 141
- DE-A- 19 752 501
- DE-A- 19 826 063
- US-A- 4 056 592
- US-A- 4 874 571
- US-B1- 6 187 422
- PATENT ABSTRACTS OF JAPAN vol. 008, no. 124 (M-301), 9. Juni 1984 (1984-06-09) & JP 59 029125 A (SHOWA DENKO KK), 16. Februar 1984 (1984-02-16)

## Beschreibung

Die Erfindung betrifft eine Vorrichtung zum Glätten und Kühlen einer aus einer Schlitzdüse austretenden Kunststoffbahn. - Kunststoffbahn meint im Rahmen der Erfindung sowohl die aus der Schlitzdüse austretende, noch plastifizierte Bahn als auch die daraus geformte Kunststofffolie.

Die mit der eingangs genannten Vorrichtung hergestellten geglätteten Kunststoffbahnen werden vor allem in der Verpackungsindustrie verwendet. Für diese Kunststofffolien ist eine hohe Transparenz wünschenswert. Die Transparenz hängt vom Verhältnis der Kristallisationsgeschwindigkeit zur Abkühlungsgeschwindigkeit ab. Eine hohe Abkühlungsgeschwindigkeit führt in der Regel zu Kunststofffolien mit relativ hoher Transparenz. Deshalb ist es wünschenswert, die Kunststoffbahnen möglichst schnell und möglichst stark abzukühlen. ,

Aus DE 198 26 063 A1 ist eine Vorrichtung zum Kühlen einer Kunststoffbahn bekannt, bei der die Kunststoffbahn über eine Kühlwalze geführt wird. Dabei wird in den Zwickel zwischen der Kühlwalze und der Kunststoffbahn Luft eingerissen, die einen Luftspalt zwischen der Kunststoffbahn und der Oberfläche der Kühlwalze bildet. Diese Luft wirkt in nachteilhafter Weise als Wärmeisolator. Um diesen Nachteil zu vermeiden, wird oberhalb der Kühlwalze eine Kühlluftkammer angeordnet, die mehrere Luftleisten aufweist, die mit geringem Abstand in Umfangsrichtung der Kühlwalze hintereinander angeordnet sind und sich über die axiale Länge der Kühlwalze erstrecken. Mit diesen Luftleisten wird gekühlte Druckluft auf die Oberfläche der Kunststoffbahn geführt. Die Kühlwirkung dieser bekannten Vorrichtung lässt aber zu wünschen übrig.

Aus US 4,874,571 ist eine Vorrichtung zum Glätten einer aus einer Schlitzdüse austretenden Kunststoffbahn bekannt. Die Kunststoffbahn, die vorzugsweise aus Polypropylen bestehen soll, wird zwischen zwei gekühlten Glättwalzen hindurchgeführt, die einen Glättspalt bilden. Die aus dem Glättspalt austretende Kunststoffbahn löst sich ablaufend von der ersten der Glättwalzen und umschlingt danach die zweite der Glättwalzen bereichsweise. Auf der Ablaufseite der Kunststoffbahn ist eine sich über die Breite der Glättwalzen erstreckende Blasvorrichtung mit einer Schlitzdüse für ein Kühlgas angeordnet, wobei das Kühlgas die ablaufende Kunststoffbahn beaufschlagt. Bei dieser Vorrichtung lässt sowohl der Glätteffekt als auch der Kühleffekt der Kunststoffbahn zu wünschen übrig.

Bei einer weiteren aus der Praxis bekannten Vorrichtung wird die aus der Schlitzdüse austretende Kunststoffbahn durch einen Glätt- und Kühlspalt geführt, der einerseits von einer gekühlten Glättwalze und andererseits von einem über einen Teil des Umfangs der Glättwalze verlaufenden gekühlten Endlosband gebildet wird. Das Endlosband weist an seinen beiden Umkehrpunkten jeweils eine gekühlte Walze auf, die von dem Endlosband umschlungen bzw. umlaufen wird. Wenn das in Förderrichtung der Kunststoffbahn laufende Endlosband von der ersten gekühlten Walze abgekühlt wird, so wärmt es sich beim anschließenden Anliegen an der Kunststoffbahn relativ schnell auf, so dass der Kühleffekt stark zu wünschen übrig lässt. Mit anderen Worten erwärmt die Kunststoffbahn das Endlosband, bevor es wieder an der zweiten gekühlten Walze ausreichend abgekühlt wird. Abgesehen davon, dass mit diesem Endlosband kein vernünftiger Kühleffekt erzielt werden kann, ist auch der Glätteffekt völlig unbefriedigend. Im Übrigen ist die Oberfläche der Kunststoffbahn bzw. die Kunststofffolienoberfläche in nachteilhafter Weise von der Qualität des Endlosbandes abhängig. Wenn das Endlosband Unregelmäßigkeiten aufweist oder beispielsweise eine Schweißnaht hat, so finden sich entsprechende unerwünschte Markierungen in der Kunststoffbahn. Da vor allem der Kühleffekt dieser bekannten Vorrichtung mangelhaft ist, eignet sich diese Vorrichtung nicht für die Herstellung von Kunststofffolien mit hoher Transparenz. Im Ergebnis hat sich diese bekannte Vorrichtung nicht bewährt.

Demgegenüber liegt der Erfindung das technische Problem zugrunde, eine Vorrichtung der eingangs genannten Art anzugeben, mit der einerseits ein optimaler Glätteffekt und andererseits auch ein hoher Kühleffekt bzw. eine hohe Abkühlungsgeschwindigkeit erreicht werden kann und mit der insbesondere Folien mit hoher Transparenz hergestellt werden können.

Zur Lösung dieses technischen Problems lehrt die Erfindung eine Vorrichtung zum Glätten und Kühlen einer aus einer Schlitzdüse austretenden Kunststoffbahn,
wobei eine Glätteinrichtung aus einer ersten Glättwalze und aus einer gekühlten zweiten Glättwalze zur Glättung der durch einen Glättspalt zwischen den beiden Glättwalzen hindurchgeführten Kunststoffbahn vorgesehen ist,
wobei die Kunststoffbahn hinter dem Glättspalt zwecks Kühlung der Kunststoffbahn weiterhin über die Oberfläche der gekühlten zweiten Glättwalze führbar ist,
wobei über der Oberfläche der gekühlten zweiten Glättwalze bzw. über der über die gekühlte zweite Glättwalze geführten Kunststoffbahn zumindest zwei in Förderrichtung der Kunststoffbahn hinter dem Glättspalt hintereinander angeordnete Kühlluftkammern zur Beaufschlagung der Kunststoffbahn mit Kühlluft vorgesehen sind,
wobei jede der Kühlluftkammern zumindest einen Lufteinlass und zumindest einen Luftauslass aufweist, wobei Lufteinlass und Luftauslass mit der Maßgabe angeordnet sind, dass die durch den Lufteinlass eintretende Kühlluft zunächst die Kunststoffbahnoberfläche beaufschlagt und danach durch den Luftauslass wieder aus der Kühlluftkammer austritt
und wobei in beiden Kühlluftkammern eine unterschiedliche Temperatur der Kühlluft einstellbar ist.

Mit dem Begriff Kühlluft ist auch ganz allgemein ein gekühltes Gas beliebiger Art gemeint, obwohl gekühlte Luft im Rahmen der Erfindung bevorzugt wird.

Der Erfindung liegt die Erkenntnis zugrunde, dass mit der erfindungsgemäßen Vorrichtung eine sehr effektive Kühlung der Kunststoffbahn von beiden Seiten der Bahn möglich ist. Eine Oberfläche der Kunststoffbahn wird von der gekühlten Walze gekühlt und die andere Oberfläche wird von der Kühlluft der Kühlluftkammern gekühlt. Mit dieser Vorrichtung lassen sich in vorteilhafter Weise Kunststofffolien mit sehr hoher Transparenz herstellen. Zweckmäßigerweise werden deshalb mit der Vorrichtung insbesondere Kunststofffolien mit einer Dicke < 200µm produziert.

Es liegt im Rahmen der Erfindung, dass die erste Glättwalze gekühlt ist. Dann wird also sowohl die erste Glättwalze als auch die zweite Glättwalze gekühlt. Die zweite Glättwalze übernimmt die Kühlung der Kunststoffbahn im Bereich der Kühlluftkammer. Die Kunststoffbahn bleibt nach dem Durchlaufen des Glättspaltes zwischen erster und zweiter Glättwalze in Kontakt mit der gekühlten zweiten Glättwalze bzw. umschlingt die gekühlte zweite Glättwalze in entsprechender Weise.

Zweckmäßigerweise sind die Kühlluftkammern unmittelbar über der Oberfläche der gekühlten Walze bzw. unmittelbar über der auf der gekühlten Walze aufliegenden Kunststoffbahn angeordnet. Erfindungsgemäß weist jede Kühlluftkammer zumindest einen Lufteinlass und zumindest einen Luftauslass auf, wobei Lufteinlass und Luftauslass mit der Maßgabe angeordnet sind, dass die durch den Lufteinlass eintretende Kühlluft zunächst die Kunststoffbahnoberfläche beaufschlagt und danach durch den Luftauslass wieder aus der Kühlluftkammer austritt.

Die Kühlluftkammern sind zur gekühlten Walze hin bzw. zur Kunststoffbahn hin zumindest teilweise offen ausgebildet. Vorzugsweise sind die Kühlluftkammern ansonsten bis auf den Lufteinlass und den Luftauslass als geschlossene Kammer ausgebildet und weisen entsprechende Kammerwände auf. Zweckmäßigerweise sind nur schmale Spalte vorhanden, durch die die auf der gekühlten Walze aufliegende Kunststoffbahn in eine Kühlluftkammer eintritt. Diese Spalte haben vorzugsweise eine Spaltbreite (in radialer Richtung der gekühlten Walze) von einigen Millimetern. Es liegt im Rahmen der Erfindung, dass sich eine der gekühlten Walze bzw. der Kunststoffbahn zugewandte Öffnung der Kühlluftkammer über zumindest einen Teil des Umfangs der gekühlten Walze erstreckt. Diese Öffnung einer Kühlluftkammer erstreckt sich vorzugsweise über zumindest ein Zwanzigstel, bevorzugt über zumindest ein Fünfzehntel und sehr bevorzugt über zumindest ein Zehntel des Umfanges der gekühlten Walze.

Nach sehr bevorzugter Ausführungsform der Erfindung weist eine Kühlluftkammer einen entlang der Oberfläche der auf der gekühlten Walze aufliegenden Kunststoffbahn verlaufenden Luftspalt auf, durch welchen Luftspalt die vom Lufteinlass der Kühlluftkammer kommende Kühlluft an der Kunststoffbahnoberfläche entlangströmt. Zweckmäßigerweise ist der Luftspalt parallel zur Kunststoffbahnoberfläche angeordnet. Die Kühlluft strömt vorzugsweise parallel und/oder tangential zur Kunststoffbahnoberfläche durch den Luftspalt. Nach sehr bevorzugter Ausführungsform ist die Spaltweite des Luftspaltes einstellbar. Spaltweite meint die Ausdehnung des Luftspaltes in radialer Richtung der gekühlten Walze. Die Spaltweite beträgt vorzugsweise nur einige Millimeter, beispielsweise 1 bis 20 Millimeter. Die Spaltweite des Luftspaltes wird zweckmäßigerweise mit einem geeigneten Stellelement eingestellt.

Nach bevorzugter Ausführungsform der Erfindung strömt in den Lufteinlass einer Kühlluftkammer Kühlluft mit einer Temperatur zwischen 10 und 50 °C, vorzugsweise zwischen 10 und 45 °C ein. Nach einer besonders bevorzugten Ausführungsform hat die in den Lufteinlass einströmende Kühlluft eine Temperatur von 15 bis 40 °C.

Vorzugsweise sind lediglich zwei Kühlluftkammern vorgesehen, wobei diese beiden Kühlluftkammern bevorzugt unmittelbar hintereinander angeordnet sind. Die Kunststoffbahn tritt dann also von der ersten Kühlluftkammer unmittelbar in die zweite Kühlluftkammer ein. - Nach einer bevorzugten Ausführungsform der Erfindung arbeitet die erste Kühlluftkammer mit Kühlluft einer Temperatur zwischen 5 und 40 °C, vorzugsweise zwischen 10 und 35 °C und arbeitet eine zweite, der ersten Kühlluftkammer nachgeschaltete Kühlluftkammer mit Kühlluft einer Temperatur zwischen 10 und 50 °C, vorzugsweise zwischen 15 und 45 °C. Zweckmäßigerweise ist die Temperatur der in die erste Kühlluftkammer eingeführten Kühlluft niedriger als die Temperatur der in die zweite Kühlluftkammer eingeführten Kühlluft. Vorzugsweise sind die Temperaturen der den Kühlluftkammern zuführbaren Kühlluft einstellbar.

Nach bevorzugter Ausgestaltung ist hinter den Kühlluftkammern (bezogen auf die Förderrichtung der Kunststoffbahn) ein weiterer Glättspalt zwischen zwei Glättwalzen vorgesehen, durch den die Kunststoffbahn geführt wird. Zweckmäßigerweise handelt es sich um gekühlte Glättwalzen.

Nach sehr bevorzugter Ausführungsform bildet die zweite Glättwalze, die bereits mit der ersten Glättwalze den ersten Glättspalt bildet, mit einer dritten Glättwalze den zweiten Glättspalt hinter der Kühlluftkammer.

Der Erfindung liegt die Erkenntnis zugrunde, dass mit der erfindungsgemäßen Vorrichtung sowohl ein optimaler Glätteffekt als auch ein hervorragender Kühleffekt erreicht wird. Aufgrund der mit der erfindungsgemäßen beidseitigen Kühlung erzielten hohen Abkühlungsgeschwindigkeit können Kunststofffolien mit überraschend hoher Transparenz erhalten werden. Die Vorrichtung eignet sich vor allem für Kunststoffbahnen bzw. -folien mit Dicken unter 200µm. Insbesondere mit den Einstellungsmöglichkeiten an einer Kühlluftkammer und durch die Kombination mehrerer Kühlluftkammern können optimale Folieneigenschaften erhalten werden und die gewünschten Folieneigenschaften können auch gezielt eingestellt werden. Bei Kombination von zwei Kühlluftkammern kann eine sogenannte weiche Kühlung der Kunststoffbahn erzielt werden, wenn in beiden Kühlluftkammern mit unterschiedlicher Temperatur der Kühlluft gearbeitet wird. Hervorzuheben ist, dass die erfindungsgemäße Vorrichtung relativ einfach und wenig aufwendig aufgebaut ist. Bestehende Anlagen können problemlos mit den erfindungsgemäßen Komponenten nachgerüstet werden.

Nachfolgend wird die Erfindung anhand einer lediglich ein Ausführungsbeispiel darstellenden Zeichnung näher erläutert. Es zeigen in schematischer Darstellung:
- Fig. 1: eine aus dem Stand der Technik bekannte Vorrichtung und
- Fig. 2: eine erfindungsgemäße Vorrichtung.

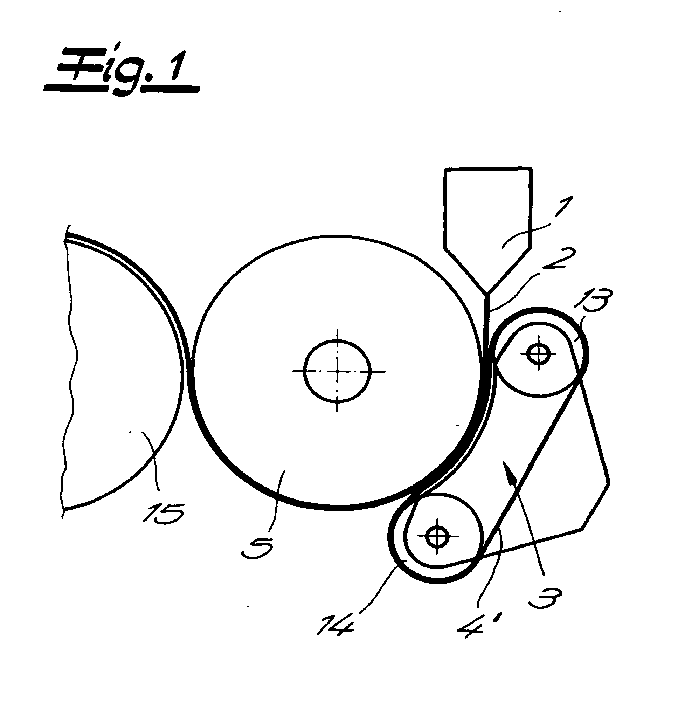

In Fig. 1 ist eine aus dem Stand der Technik bekannte Vorrichtung dargestellt. Hier wird die aus der Schlitzdüse 1 austretende Kunststoffbahn 2 durch eine Glätteinrichtung 3 geführt. Die Glätteinrichtung 3 besteht aus einer gekühlten Glättwalze 5 und aus einem Endlosband 4'. Das Endlosband 4' liegt über einen Teil des Umfangs der Glättwalze 5 an der Kunststoffbahn 2 an. Zur Kühlung des Endlosbandes 4' bzw. der Kunststoffbahn 2 ist das Endlosband 4' über gekühlte Walzen 13, 14 geführt. Die aus dem Glätt- und Kühlspalt zwischen Glättwalze 5 und Endlosband 4' austretende Kunststoffbahn 2 umschlingt die Glättwalze 5 weiterhin und wird dann durch einen weiteren Glättspalt geführt, der zwischen der Glättwalze 5 und einer weiteren gekühlten Glättwalze 15 gebildet wird.

Der mit der bekannten Vorrichtung erreichte Kühleffekt ist völlig unbefriedigend. Das Endlosband 4' wird zunächst an der gekühlten Walze 13 gekühlt, bevor es mit der Kunststoffbahn 2 in Kontakt kommt. Das auf diese Weise vorgekühlte Endlosband 4' erwärmt sich dann während des Berührungskontaktes mit der Kunststoffbahn 2 relativ schnell, so dass eine vernünftige Kühlung der Kunststoffbahn 2 nicht zustandekommt. Auch ein befriedigender Glätteffekt lässt sich mit dem Aggregat aus Glättwalze 5 und Endlosband 4' nicht erzielen.

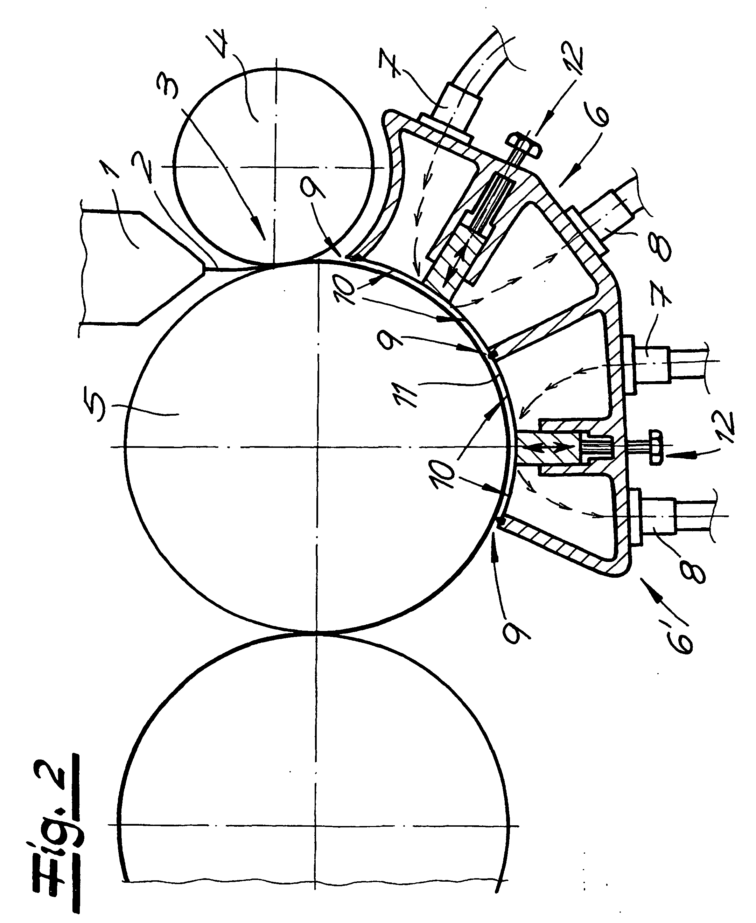

Demgegenüber zeigt die Fig. 2 eine erfindungsgemäße Vorrichtung. Die aus der Schlitzdüse 1 austretende Kunststoffbahn 2 wird hier zunächst durch eine Glätteinrichtung 3 aus einer ersten Glättwalze 4 und aus einer zweiten Glättwalze 5 hindurchgeführt. Beide Glättwalzen 4, 5 werden gekühlt und weisen beispielsweise eine Temperatur zwischen 10 und 25 °C auf. Hinter der Glätteinrichtung 3 bzw. hinter dem entsprechenden Glättspalt umschlingt die Kunststoffbahn 2 weiterhin die gekühlte zweite Glättwalze 5. Diese Glättwalze 5 entspricht bei der in Fig. 2 dargestellten bevorzugten Ausführungsform der Erfindung der weiter oben in der Beschreibung und in den Patentansprüchen als gekühlte Walze bezeichneten Walze. Die Glättwalze 5 dient zur Kühlung der auf der Glättwalze 5 aufliegenden ersten Seite der Kunststoffbahn 2. Über der Oberfläche der Glättwalze 5 bzw. über der über die Glättwalze 5 geführten Kunststoffbahn 2 sind im Ausführungsbeispiel zwei Kühlluftkammern 6, 6' angeordnet. In den Kühlluftkammern 6, 6' wird die Oberfläche der Kunststoffbahn 2 mit Kühlluft beaufschlagt. Die Kühlluftkammern 6, 6' dienen also zur Kühlung der zweiten Seite der Kunststoffbahn 2.

In Fig. 2 ist erkennbar, dass die Kühlluftkammern 6, 6' zweckmäßigerweise unmittelbar über der Oberfläche der Glättwalze 5 bzw. unmittelbar über der auf der gekühlten Glättwalze 5 aufliegenden Kunststoffbahn 2 angeordnet sind. Beide Kühlluftkammern 6, 6' weisen einen Lufteinlass 7 und einen Luftauslass 8 auf, wobei Lufteinlass 7 und Luftauslass 8 mit der Maßgabe angeordnet sind, dass die durch den Lufteinlass 7 eintretende Kühlluft zunächst die Kunststoffbahnoberfläche beaufschlagt und danach durch den Luftauslass 8 wieder aus der Kühlluftkammer 6, 6' austritt. Die Strömungsrichtung der Kühlluft wurde in der Fig. 2 mit Hilfe von Pfeilen angedeutet.

Die Kühlluftkammern 6, 6' sind zur gekühlten Glättwalze 5 hin bzw. zur Kunststoffbahn 2 hin offen und bis auf Lufteinlass 7 und Luftauslass 8 handelt es sich ansonsten zweckmäßigerweise um geschlossene Kammern. Zwischen den Kühlluftkammern 6, 6' und der Glättwalze 5 sind lediglich schmale Durchtrittsspalte 9 für den Durchgang der Kunststofffolienbahn 2 vorgesehen. In der Fig. 2 ist erkennbar, dass sich eine der Glättwalze 5 bzw. der Kunststoffbahn 2 zugewandte Öffnung 10 der Kühlluftkammern 6, 6' über einen Teil des Umfanges der Glättwalze 5 erstreckt und zwar vorzugsweise und im Ausführungsbeispiel über mehr als ein Zehntel des Umfanges der Glättwalze 5.

Nach sehr bevorzugter Ausführungsform und im Ausführungsbeispiel nach Fig. 2 weisen die Kühlluftkammern 6, 6' jeweils einen entlang der Oberfläche der auf der Glättwalze 5 aufliegenden Kunststoffbahn 2 verlaufenden Luftspalt 11 auf, durch welchen Luftspalt 11 die vom Lufteinlass 7 der Kühlluftkammer 6, 6' kommende Kühlluft an der Kunststoffbahnoberfläche entlangströmt. Zweckmäßigerweise und im Ausführungsbeispiel ist der Luftspalt 11 parallel zur Kunststoffbahn 2 bzw. zur Oberfläche der Glättwalze 5 angeordnet und die Kühlluft strömt parallel zur Kunststoffbahn 2 durch den Luftspalt 11. Vorzugsweise ist die Spaltweite des Luftspaltes 11 mittels eines Stellelementes 12 einstellbar. Das ist in Fig. 2 durch Doppelpfeile angedeutet worden.

Nach einer bevorzugten Ausführungsform der Erfindung beträgt die Temperatur der durch den Lufteinlass 7 der ersten Kühlluftkammer 6 eingeführten Kühlluft 15 bis 30 °C und beträgt die Temperatur der durch den Lufteinlass 7 der zweiten Kühlluftkammer 6' eingeführten Kühlluft 20 bis 40 °C. Dabei ist zweckmäßigerweise die Temperatur der der ersten Kühlluftkammer 6 zugeführten Kühlluft niedriger als die Temperatur der der zweiten Kühlluftkammer 6'zugeführten Kühlluft. Zweckmäßigerweise ist die Temperatur der jeder Kühlluftkammer 6, 6' zugeführten Kühlluft einstellbar. Mit Hilfe der beiden Kühlluftkammern 6, 6' und durch die Einstellung unterschiedlicher Temperaturen der diesen Kühlluftkammern 6, 6' zugeführten Kühlluft kann eine effektive Kühlung der Kunststoffbahn 2 erzielt werden.

Die die Kühlluftkammer 6' verlassende Kunststoffbahn 2 wird im Ausführungsbeispiel nach Fig. 2 nochmals durch einen Glättspalt geführt, der im Ausführungsbeispiel nach Fig. 2 von der zweiten gekühlten Glättwalze 5 und einer dritten gekühlten Glättwalze 15 gebildet wird. Auch die dritte gekühlte Glättwalze 15 weist vorzugsweise eine Oberflächentemperatur zwischen 10 und 25 °C auf.

## Patentansprüche

1. Vorrichtung zum Glätten und Kühlen einer aus einer Schlitzdüse (1) austretenden Kunststoffbahn (2),
wobei eine Glätteinrichtung (3) aus einer ersten Glättwalze (4) und aus einer gekühlten zweiten Glättwalze (5) zur Glättung der durch einen Glättspalt zwischen den beiden Glättwalzen (4, 5) hindurchgeführten Kunststoffbahn (2) vorgesehen ist,
wobei die Kunststoffbahn (2) hinter dem Glättspalt zwecks Kühlung der Kunststoffbahn (2) weiterhin über die Oberfläche der gekühlten zweiten Glättwalze (5) führbar ist,
wobei über der Oberfläche der gekühlten zweiten Glättwalze (5) bzw. über der über die gekühlte zweite Glättwalze (5) geführten Kunststoffbahn (2) zumindest zwei in Förderrichtung der Kunststoffbahn (2) hinter dem Glättspalt hintereinander angeordnete Kühlluftkammern (6, 6') zur Beaufschlagung der Kunststoffbahn (2) mit Kühlluft vorgesehen sind,
wobei jede der Kühlluftkammern (6, 6') zumindest einen Lufteinlass (7) und zumindest einen Luftauslass (8) aufweist, wobei Lufteinlass (7) und Luftauslass (8) mit der Maßgabe angeordnet sind, dass die durch den Lufteinlass (7) eintretende Kühlluft zunächst die Kunststoffbahnoberfläche beaufschlagt und danach durch den Luftauslass (8) wieder aus der Kühluftkammer (6, 6') austritt
und wobei in beiden Kühlluftkammern (6, 6') eine unterschiedliche Temperatur der Kühlluft einstellbar ist.

2. Vorrichtung nach Anspruch 1, wobei auch die erste Glättwalze (4) gekühlt ist.

3. Vorrichtung nach einem der Ansprüche 1 oder 2, wobei sich eine der gekühlten zweiten Glättwalze (5) bzw. der Kunststoffbahn (2) zugewandte Öffnung (10) einer Kühlluftkammer (6, 6') über zumindest einen Teil des Umfanges der gekühlten Walze erstreckt.

4. Vorrichtung nach einem der Ansprüche 1 bis 3, wobei die Kühlluftkammern (6, 6') einen entlang der Oberfläche der auf der gekühlten zweiten Glättwalze (5) aufliegenden Kunststoffbahn (2) verlaufenden Luftspalt (11) aufweisen, durch den die vom Lufteinlass (7) der Kühlluftkammer (6, 6') kommende Kühlluft an der Kunststoffbahnoberfläche entlangströmt.

5. Vorrichtung nach Anspruch 4, wobei die Spaltweite des Luftspaltes (11) einstellbar ist.

## Claims

1. An apparatus for smoothing and cooling a synthetic strip (2) emerging from a slit nozzle (1),
a smoothing device (3) comprising a first smoothing roll (4) and a cooled second smoothing roll (5) being provided for smoothing the synthetic strip (2) conveyed through a smoothing gap between the two smoothing rolls (4, 5),
the synthetic strip (2) behind the cooling gap furthermore being conveyable, for the purpose of cooling the synthetic strip (2), over the surface of the cooled second cooling roll (5),
at least two cool air chambers (6, 6') disposed behind one another in the conveying direction of the synthetic strip (2) behind the smoothing gap being provided over the surface of the cooled second smoothing roll (5) and over the synthetic strip (2) conveyed over the cooled second smoothing roll (5) in order to subject the synthetic strip (2) to cool air,
each of the cool air chambers (6, 6') having at least one air inlet (7) and at least one air outlet (8), the air inlet (7) and the air outlet (8) being disposed with the requirement that the cool air entering through the air inlet (7) acts first of all upon the synthetic strip surface and then exits from the cool air chamber again (6, 6') through the air outlet (8)
and it being possible to set a different cool air temperature in the two cool air chambers (6, 6').

2. The apparatus according to Claim 1, the first smoothing roll (4) also being cooled.

3. The apparatus according to either of Claims 1 and 2, an opening (10) of a cool air chamber (6, 6')
facing one of the cooled second smoothing roll (5) or the synthetic strip (2) extending over at least part of the circumference of the cooled roll.

4. The apparatus according to any of Claims 1 to 3, the cool air chambers (6 6') having an air gap
(11) extending along the surface of the synthetic strip (2) lying on the cooled second smoothing roll (5) through which the cool air coming from the air inlet (7) of the cool air chambers (6, 6') flows along the synthetic strip surface.

5. The apparatus according to Claim 4, the gap width of the air gap (11) being adjustable.

## Revendications

1. Dispositif de lissage et de refroidissement d'une bande de matière plastique (2) sortant d'une filière à fente (1),
dans lequel il est prévu un moyen de lissage (3) constitué d'un premier rouleau de lissage (4) et d'un deuxième rouleau de lissage refroidi (5) destinés au lissage de la bande de matière plastique (2) guidée dans un espace de lissage existant entre les deux rouleaux de lissage (4, 5),
dans lequel la bande de matière plastique (2) peut encore être guidée, derrière l'espace de lissage, en refroidissant ladite bande de matière plastique (2) sur la surface du deuxième rouleau de lissage refroidi (5),
dans lequel, au-dessus de la surface du deuxième rouleau refroidi (5) ou au-dessus de la bande de matière plastique (2) guidée sur le deuxième rouleau refroidi (5), il est successivement disposé, derrière l'espace de lissage, dans la direction d'avancée de la bande de matière plastique (2) au moins deux compartiments d'air froid (6, 6') servant à l'application d'air froid sur la bande de matière plastique (2),
dans lequel chacun des compartiments d'air froid (6, 6') présente au moins une entrée d'air (7) et au moins une sortie d'air (8), ladite entrée d'air (7) et ladite sortie d'air (8) étant agencées à la condition que l'air froid entrant par l'entrée d'air (7) soit tout d'abord appliqué sur la surface de la bande de matière plastique puis ressorte des compartiments d'air froid (6, 6') par la sortie d'air (8),
et dans lequel il est possible de régler une température différente de l'air froid dans les deux compartiments d'air froid (6, 6').

2. Dispositif selon la revendication 1, dans lequel le premier rouleau de lissage (4) est également refroidi.

3. Dispositif selon l'une des revendications 1 ou 2, dans lequel une ouverture (10) d'un compartiment d'air froid (6, 6'), qui est tournée vers le deuxième rouleau refroidi (5) ou vers la bande de matière plastique (2), se prolonge sur au moins une partie de la circonférence du rouleau refroidi.

4. Dispositif selon l'une des revendications 1 à 3, dans lequel les compartiments d'air froid (6, 6') présentent un entrefer (11) se prolongeant le long de la surface de la bande de matière plastique (2) disposée contre le deuxième rouleau de lissage refroidi (5), à travers lequel entrefer l'air froid provenant de l'entrée d'air (7) des compartiments d'air froid (6, 6') circule le long de la surface de la bande de matière plastique.

5. Dispositif selon la revendication 4, dans lequel il est possible de régler la largeur de l'entrefer (11).
